# EUROPÄISCHE PATENTANMELDUNG

(11) **EP 2 522 577 A1**
(43) Veröffentlichungstag der Anmeldung: **14.11.2012**
(21) Anmeldenummer: 12003466.5
(22) Anmeldetag: 07.05.2012
(51) Int. Cl.: B64G 1/10, B64G 1/56, B64G 1/64

(54) **Vorrichtung zum Einfangen von Weltraum-Müll**

(30) Priorität: 09.05.2011 DE 102011100971
(71) Anmelder: Astrium GmbH, 82024 Taufkirchen (DE)
(72) Erfinder: Knirsch, Ulrich, Dr., 88677 Markdorf (DE)
(74) Vertreter: Avenhaus, Beate

(57) **Zusammenfassung**

Die Erfindung betrifft eine Vorrichtung zum Einfangen von Weltraum-Müll (10) mit mindestens einem seilartigen Einfangmittel (12, 14) für Weltraum-Müll, das ein zum Wickeln um Weltraum-Müll oder Teilen davon ausgebildetes Endstück (16, 18) aufweist, wobei das seilartige Einfangmittel ferner derart ausgebildet ist, dass es bei Kontakt mit dem Weltraum-Müll eine zum Schleppen des Weltraum-Mülls ausreichende Reibung erzeugen kann.

## Beschreibung

Die Erfindung betrifft eine Vorrichtung zum Einfangen von Weltraum-Müll gemäß Anspruch 1.

Durch die zunehmende Nutzung des Weltraums entsteht viel Weltraum-Müll oder -Schrott beispielsweise durch nichtfunktionale Satelliten, ausgebrannte Raketenstufen und Satelliten- und Raketen-Bruchteile. Derartiger Weltraum-Müll stellt aufgrund der üblicherweise hohen Differenzgeschwindigkeiten zwischen Müll und funktionalen Objekten wie Satelliten oder Raumstationen eine große Gefahr dar, da aufgrund der hohen Geschwindigkeiten bereits kleine Müllteile sehr hohe kinetische Energien besitzen können, so dass beim Aufprall zum Teil beträchtlichen Schaden angerichtet werden kann.

Um Weltraum-Müll zu vermeiden, sind Raumfahrzeuge wie Satelliten in der Regel so ausgebildet, dass sie sich nach Ablauf ihrer Lebensdauer selber "entsorgen", beispielsweise sich selbstständig in eine ungenutzte Umlaufbahn (sogenannter Friedhofsorbit) befördern oder sich wie Raketentriebwerkstufen abbremsen, um in der Erdatmosphäre zu verglühen. Bei Defekten können jedoch nicht mehr genutzte Raumfahrzeuge in Umlaufbahnen verbleiben und dort für die funktionalen Raumfahrzeuge eine Kollisionsgefahr darstellen. Beispielsweise kann es vorkommen, dass ein im Betrieb befindlicher Satellit mit einem defekten, nicht mehr nutz- und steuerbaren Satelliten kollidiert und so noch mehr Weltraum-Müll in der betroffenen Umlaufbahn entsteht.

Vor allem in niedrigeren Erdumlaufbahnen ist es effizient, größere Teile von Weltraum-Müll oder -Schrott wie beispielsweise defekte Satelliten zum Absturz zu bringen, so dass sie beim Eintritt in die Erdatmosphäre verglühen. Um solche Absturzmanöver einleiten zu können, werden sogenannte "Abschleppsatelliten" untersucht, die sich beispielsweise in unmittelbare Nähe eines defekten Satelliten begeben und dort an einer Triebwerksdüse oder ähnlichem andocken sollen. Insbesondere das Andocken ist jedoch technisch aufwendig, da hierfür keine standardisierten Adapter existieren. Außerdem ist das Manöver für den Abschleppsatelliten äußerst heikel, da davon ausgegangen werden muss, dass der defekte Satellit rotiert oder gar taumelt und daher beim Annäherungs- und Andockmanöver die Gefahr einer Kollision, die unbedingt vermieden werden muss, steigt.

Es ist nun eine Aufgabe der vorliegenden Erfindung, eine weiter entwickelte Vorrichtung zum Einfangen von Weltraum-Müll vorzuschlagen, die vor allem geeignet ist, taumelnden oder rotierenden Weltraum-Müll einzufangen, insbesondere ohne Hilfestellung des Weltraum-Mülls.

Diese Aufgabe wird durch eine Vorrichtung zum Einfangen von Weltraum-Müll mit den Merkmalen von Anspruch 1 gelöst. Weitere Ausgestaltungen der Erfindung sind Gegenstand der abhängigen Ansprüche.

Eine der Erfindung zugrunde liegende Idee besteht darin, dass Weltraum-Müll mit einem seilartigen Einfangmittel eingefangen wird, das um den Müll gewickelt wird und bei Kontakt mit Weltraum-Müll eine derart große Reibung erzeugt, dass der Müll geschleppt werden kann. Unter Ausnutzung der durch das erfindungsgemäße seilartige Einfangmittel in Kontakt mit dem Müll erzeugten Reibung kann der so eingefangene Müll beispielsweise von einem Abschleppsatelliten in Schlepp genommen und in einen Friedhofsorbit befördert oder zum Absturz gebracht werden. Mit Hilfe der Erfindung kann vor allem taumelnder oder rotierender Weltraum-Müll eingefangen werden, ohne dass sich beispielsweise ein Abschleppsatellit so weit dem Müll nahem muss, dass die Gefahr einer Kollision vorliegt. Die erfindungsgemäße Vorrichtung weist auch den Vorteil auf, dass sie prinzipiell für mehrere Einfangversuche verwendet werden kann, d.h. nicht nur einen Versuch ermöglicht, sondern reversibel ausgestaltet werden kann. Sie kann auch so ausgestaltet sein, dass sie für mehrere aufeinander folgende Einfang- und Abschlepp-Missionen von Weltraum-Müll verwendet werden kann. Weiterhin ist sie vergleichsweise einfach und kostengünstig herstellbar und weist eine relativ geringe Masse auf, was bei Weltraum-Missionen grundsätzlich von großem Vorteil ist.

Eine Ausführungsform der Erfindung betrifft nun eine Vorrichtung zum Einfangen von Weltraum-Müll mit mindestens einem seilartigen Einfangmittel für Weltraum-Müll, das ein zum Wickeln um Weltraum-Müll oder Teilen davon ausgebildetes Endstück aufweist, wobei das seilartige Einfangmittel ferner derart ausgebildet ist, dass es bei Kontakt mit dem Weltraum-Müll eine zum Schleppen des Weltraum-Mülls ausreichende Reibung erzeugen kann. Die Vorrichtung kann beispielsweise eine oder zwei Seilrollen aufweisen, mit denen Einfangseile mit hohem Reibungskoeffizienten für Weltraum-Müll mit speziellen Endstücken auf- und abgewickelt werden können.

Das seilartige Einfangmittel kann eine derart geringe Biegesteifigkeit aufweise, dass die zum Schleppen des Weltraum-Mülls ausreichende Reibung erzeugt werden kann. Das seilartige Einfangmittel kann ferner einen derart großen Reibungskoeffizienten besitzen, dass die Haftreibungskraft auf Weltraum-Müll größer als eine vorgegebene Schleppkraft ist. Das seilartige Einfangmittel kann auch zusätzliche Haftmittel, insbesondere Klebematerialien, zum Erzeugen einer zum Schleppen des Weltraum-Mülls ausreichenden Reibung aufweisen.

Die Vorrichtung kann ferner ausgebildet sein, das mindestens eine seilartige Einfangmittel für Weltraum-Müll in eine Rotation zu versetzen. Hierdurch kann sich durch das rotierende seilartige Einfangmittel beim Auftreffen auf Weltraum-Müll um diesen wickeln.

Die Vorrichtung kann ferner durch Abtrennmittel zum Durchtrennen der mindestens einen seilartigen Einfangmittel für Weltraum-Müll gekennzeichnet sein. Beispielsweise können als Abtrennmittel Schneidmesser eingesetzt werden, die vor einem endgültigen Absturz beispielsweise eines abgeschleppten Satelliten die seilartigen Einfangmittel abtrennen.

Die Vorrichtung kann weiterhin ausgebildet sein, das mindestens eine seilartige Einfangmittel für Weltraum-Müll ein- und auszufahren. Hierdurch kann die Einfang-Reichweite eingestellt werden, wodurch die Vorrichtung an unterschiedliche Arten von Weltraum-Müll angepasst werden kann, beispielsweise weit ausgefahren bei rotierenden Satelliten mit großen Sonnensegeln oder weniger weit ausgefahren bei kleineren Müllteilen wie Satellitenbruchstücken.

Eine weitere Ausführungsform der Erfindung betrifft einen Satelliten zum Einfangen und Abschleppen von Weltraum-Müll mit mindestens einer Vorrichtung nach der Erfindung und wie oben beschrieben. Ein derartiger Satellit kann als Abschleppsatellit für mehrere Einfangmissionen konzipiert sein, mit entsprechenden Steuerungsmöglichkeiten und für die Missionen ausreichend dimensionierten Einfangmitteln.

Der Satellit kann zwei der erfindungsgemäßen Vorrichtungen aufweisen, die an gegenüberliegenden Seiten des Satelliten angebracht sind.

Der Satellit kann weiterhin ausgebildet sein, derart in eine Rotation um eine Achse versetzt zu werden, dass das seilartige Einfangmittel der mindestens einen Vorrichtung ebenfalls um die Achse rotiert.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

### Die Zeichnungen zeigen in

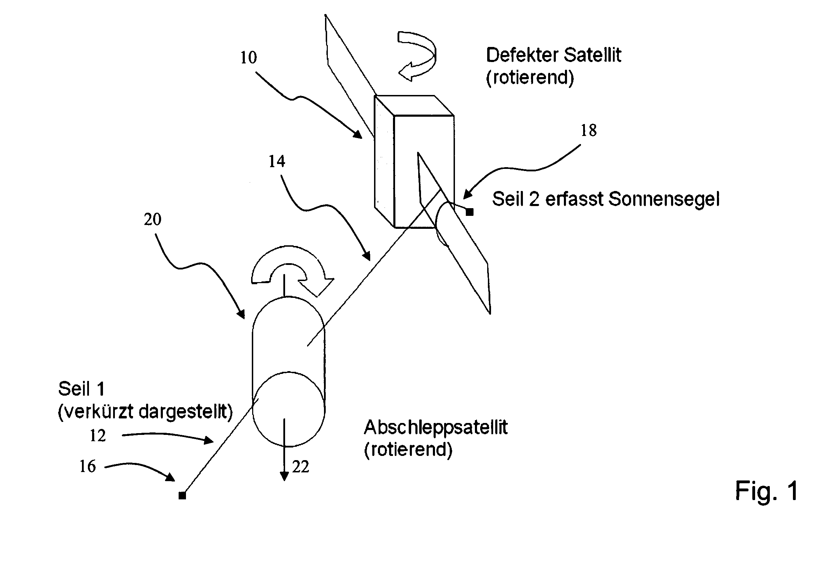

Fig. 1 schematisch einen Abschleppsatelliten gemäß der Erfindung mit einer erfindungsgemäßen Einfangvorrichtung für Weltraum-Müll, die zum Einfangen eines rotierenden defekten Satelliten verwendet wird.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

In Fig. 1 ist schematisch dargestellt, wie ein defekter und rotierender Satellit 10 mit Sonnensegeln von einem erfindungsgemäßen Abschleppsatelliten 20 zum Abschleppen eingefangen wird. Hierzu nähert sich der Abschleppsatellit 20 soweit dem defekten Satelliten 10, dass keine Gefahr einer Kollision beispielsweise mit den Sonnensegeln besteht, der defekte Satellit 10 sich aber in Einfangreichweite befindet. Dieses Näherungsmanöver wird von einem Kontrollzentrum von der Erde oder von einem Raumfahrzeug wie einer Raumstation aus gesteuert.

Sobald der Abschleppsatellit 20 in eine Einfangposition gesteuert ist, werden an zwei gegenüberliegenden Seiten des Abschleppsatelliten 20 angebrachte Einfangvorrichtungen in Form von beispielsweise Seilrollen derart angesteuert, das auf den Rollen aufgewickelte seilartige Einfangmittel 12 und 16 soweit ausfahren, dass Endstücke 14 und 18 (in Fig. 1 durch eine Punkt am Ende des Seils verdeutlicht) der seilartigen Einfangmittel 12 und 16 bis zum defekten Satelliten 10 reichen.

Die seilartigen Einfangmittel 12 und 16 sind derart ausgebildet, dass sie in Kontakt mit einem Teil des Satelliten 10 eine derart hohe Reibung erzeugen können, dass der Satellit 10 vom Abschleppsatelliten 20 geschleppt werden kann. Um diese Reibung zu erreichen, weisen die seilartigen Einfangmittel 12 und 16 eine geringe Biegesteifigkeit auf und/oder besitzen einen Reibungskoeffizienten, der eine Haftreibungskraft auf dem defekten Satelliten 10 erzeugen kann, die größer als eine zum Schleppen des Satelliten 10 erforderliche Schleppkraft ist. Die seilartigen Einfangmittel 12 und 16 können auch zusätzlich oder alternativ Haftmittel zum Erzeugen einer zum Schleppen ausreichenden Reibung der Endstücke auf dem Satelliten 10 aufweisen. Die Haftmittel können beispielsweise Klebematerialien wie als Klebmittel eingesetzte chemische Mitte, beispielsweise ein Klebstoff, oder auch mechanische Mittel wie Widerhaken aufweisen. Haftmittel sind also im Sinne der Erfindung alle Mittel, die dazu dienen, die Reibung zwischen dem seilartigen Einfangmittel 12 bzw. 16 und einem Teil des defekten Satelliten 10 zusätzlich zur ohnehin zwischen den seilartigen Einfangmitteln 12 und 16 und dem Satelliten 10 beim Einfangen auftretenden Haftreibung zu erhöhen.

Nach dem Ausfahren der seilartigen Einfangmittel 12 und 16 wird der Abschleppsatellit 20 in Rotation um seine Achse 22 versetzt, wodurch auch die ausgefahren Einfangmittel 12 und 16 rotieren. Aufgrund der Zentrifugalkraft bewegen sich die Endstücke 14 und 18, die ein das Umwickeln von Weltraum-Müll ausreichende Masse besitzen, weg vom Abschleppsatelliten 20 und spannen die ausgefahrenen Einfangmittel 12 und 16. Die gespannten Einfangmittel 12 und 16 können nun so den defekten Satelliten 10 einfangen, indem bei Kontakt mit einem Teil des Satelliten 10 wie dem Sonnensegel die Endstücke 14 bzw. 18 aufgrund ihrer Masse die seilartigen Einfangmittel 12 bzw. 16 um das Teil wickeln. In Fig. 1 ist dargestellt, wie das zweite seilartige Einfangmittel 16 mit seinem Endstück 18 um das Sonnensegel des defekten Satelliten 10 gewickelt ist.

Anstelle einer Rotation des Abschleppsatelliten 20 ist auch denkbar, eine spezielle Rotationsvorrichtung am Abschleppsatelliten vorzusehen, welche nur die Einfangvorrichtungen in Rotation derart versetzt, dass die ausgefahrenen seilartigen Einfangmittel 12 und 16 rotieren.

Sobald ein Teil des defekten Satelliten 10 von einem seilartigen Einfangmittel 14 eingewickelt ist, wird die Rotation des Abschleppsatelliten 20 gestoppt und ggf. frei, d.h. nicht um den defekten Satelliten 10 gewickelte Einfangmittel wie das erste Einfangmittel 12 eingerollt auf die Seilrolle der Einfangvorrichtung.

Dann wird das Abschleppmanöver gestartet, indem der Abschleppsatellit 20 den defekten Satelliten 10 entweder in einen Friedhofsorbit oder in Richtung zur Erdoberfläche für einen Absturz schleppt. Sobald der Friedhofsorbit oder die Absturzposition erreicht ist, wird das zweite Einfangmittel 14 gekappt, indem Schneidmesser der entsprechenden Einfangvorrichtung die seilartigen Einfangmittel 12 durchtrennen. Damit ist die Verbindung zwischen dem Abschleppsatelliten 20 und dem defekten Satelliten 10 getrennt, wodurch letzterer seinem weiteren Schicksal überlassen wird.

Der Abschleppsatellit 20 kann nun zu einer weiteren Abschleppmission gesteuert werden.

Die Erfindung ermöglicht das Einfangen von Weltraum-Müll mittels einer flexiblen Verbindung zum Müll, wodurch die Gefahr einer Kollision zwischen einer Einfangvorrichtung und dem Müll verringert werden kann. Ausserdem positioniert sich beim Abschleppen der Schwerpunkt des Weltraummülls automatisch entlang der Schubachse sodass die Triebwerkssteuerung vereinfacht wird, besonders gegenüber steifen Verbindungen.

### BEZUGSZEICHEN UND AKRONYME

- 10: defekter, rotierender Satellit (Weltraum-Müll)
- 12: erstes seilartiges Einfangmittel
- 14: Endstück des ersten seilartigen Einfangmittels
- 16: zweites seilartiges Einfangmittel
- 18: Endstück des zweiten seilartigen Einfangmittels
- 20: Abschleppsatellit
- 22: Rotationsachse des Abschleppsatelliten

## Patentansprüche

1. Vorrichtung zum Einfangen von Weltraum-Müll (10) mit mindestens einem seilartigen Einfangmittel (12, 14) für Weltraum-Müll, das ein zum Wickeln um Weltraum-Müll oder Teilen davon ausgebildetes Endstück (16, 18) aufweist, wobei das seilartige Einfangmittel ferner derart ausgebildet ist, dass es bei Kontakt mit dem Weltraum-Müll eine zum Schleppen des Weltraum-Mülls ausreichende Reibung erzeugen kann.

2. Vorrichtung nach Anspruch 1,
**dadurch gekennzeichnet, dass**
das seilartige Einfangmittel eine derart geringe Biegesteifigkeit aufweist, dass die zum Schleppen des Weltraum-Mülls ausreichende Reibung erzeugt werden kann.

3. Vorrichtung nach Anspruch 1 oder 2,
**dadurch gekennzeichnet, dass**
[das seilartige Einfangmittel] einen derart großen Reibungskoeffizienten besitzt, dass die Haftreibungskraft auf Weltraum-Müll größer als eine vorgegebene Schleppkraft ist.

4. Vorrichtung nach Anspruch 1, 2 oder 3,
**dadurch gekennzeichnet, dass**
das seilartige Einfangmittel zusätzliche Haftmittel, insbesondere Klebematerialien, zum Erzeugen einer zum Schleppen des Weltraum-Mülls ausreichenden Reibung aufweist.

5. Vorrichtung nach einem der vorhergehenden Ansprüche,
**dadurch gekennzeichnet, dass**
sie ausgebildet ist, das mindestens eine seilartige Einfangmittel für Weltraum-Müll in eine Rotation zu versetzen.

6. Vorrichtung nach einem der vorhergehenden Ansprüche,
ferner **gekennzeichnet durch**
Abtrennmittel zum Durchtrennen der mindestens einen seilartigen Einfangmittel für Weltraum-Müll.

7. Vorrichtung nach einem der vorhergehenden Ansprüche,
**dadurch gekennzeichnet, dass**
sie ausgebildet ist, das mindestens eine seilartige Einfangmittel für Weltraum-Müll ein- und auszufahren.

8. Satellit (20) zum Einfangen und Abschleppen von Weltraum-Müll mit mindestens einer Vorrichtung (12, 14, 16, 18) nach einem der vorhergehenden Ansprüche.

9. Satellit nach Anspruch 8,
**dadurch gekennzeichnet, dass**
er zwei Vorrichtungen (12, 14, 16, 18) aufweist, die an gegenüberliegenden Seiten des Satelliten angebracht sind.

10. Satellit nach Anspruch 9,
**dadurch gekennzeichnet, dass**
er ausgebildet ist, derart in eine Rotation um eine Achse (22) versetzt zu werden, dass das seilartige Einfangmittel der mindestens einen Vorrichtung ebenfalls um die Achse rotiert.
